# EUROPÄISCHE PATENTSCHRIFT

(11) **EP 3 781 578 B1**
(45) Veröffentlichungstag und Bekanntmachung des Hinweises auf die Patenterteilung: **27.10.2021**
(21) Anmeldenummer: 18765630.1
(22) Anmeldetag: 06.09.2018
(51) Int. Cl.: C07F 7/12

(54) **VERFAHREN ZUR DEHYDRIERUNG VON DICHLORSILAN**
METHOD FOR THE DEHYDROGENATION OF DICHLOROSILANE
PROCÉDÉ DE DÉSHYDROGÉNATION DU DICHLOROSILANE

(43) Veröffentlichungstag der Anmeldung: 24.02.2021
(73) Patentinhaber: Wacker Chemie AG, 81737 München (DE)
(72) Erfinder: TILLMANN, Jan, 80636 München (DE); WEIDNER, Richard, 84489 Burghausen (DE)
(74) Vertreter: Fritz, Helmut
(86) Internationale Anmeldenummer: PCT/EP2018/073933
(87) Internationale Veröffentlichungsnummer: WO 2020/048597

(56) Entgegenhaltungen:
- EP-A1- 1 705 180
- US-A1- 2002 082 438
- US-B1- 6 251 057

## Beschreibung

Die vorliegende Erfindung bezieht sich auf ein Verfahren zur Dehydrierung von Dichlorsilan, wobei Dichlorsilan in Gegenwart eines Ammonium- und/oder Phosphoniumsalzes entweder mit mindestens einem halogenierten Kohlenwasserstoff oder einem Halogenwasserstoff umgesetzt wird.

Organohalogensilane und speziell Organotrihalogensilane werden als Hydrophobierungsmittel oder als Ausgangsstoffe für Organosilane eingesetzt. Organosilane oder auch organofunktionelle Silane sind hybride Verbindungen, welche die Funktionalität von reaktiven organischen Gruppen mit den anorganischen Funktionalitäten von Alkylsilikaten verbinden. Der Einsatz als molekulare Brücken zwischen organischen Polymeren und anorganischen Materialien ist möglich. Eine weitere Anwendung von großtechnischer Bedeutung ist der Einsatz als Komponente von Siliconen.

Die einzigen Wege effizient großtechnisch C-Si Bindungen aufzubauen, sind bisher die Hydrosilylierung und der Müller-Rochow-Prozess. Wobei die Hydrosilylierung immer eine Doppelbindung bzw. Dreifachbindung am organischen Rest und eine Si-H erfordert, damit eine Si-C Bindung geknüpft werden kann. Der Müller-Rochow-Prozess geht von elementarem Silicium und einfachen chlororganischen Verbindungen wie MeCl aus. Für den Müller-Rochow-Prozess sind Temperaturen von ca. 300°C notwendig, deshalb sind die einsetzbaren Stoffe begrenzt, da sich die meisten Stoffe zersetzen.

Aus der Literatur sind einige Verfahren zur Herstellung von Organosilanen bekannt. So beschreibt US2002/0082438 A1 die Synthese von Organochlorsilanen ausgehend von Trichlorsilan, Dichlorsilan oder Dichlormethylsilan. Als weiterer Ausgangsstoff wird eine Verbindung der Formel R²R³CHX eingesetzt, mit X = Cl oder Br und R² ist ausgewählt aus (C₁₋₁₇)-Alkyl, (C₁₋₁₀)-fluoriertes Alkyl mit teilweiser oder vollständiger Fluorierung, (C₁₋₅)-Alkenyl, (CH₂)ₙSiMe₃₋ₘClₘ (mit n = 0-2 und m = 0-3), (CH₂)ₚX (mit p = 1-9 und X = Cl oder Br, oder ArCH₂X (mit Ar = aromatischer (C₆₋₁₄)-Kohlenwasserstoff und X = Cl oder Br), und R³ ist ausgewählt aus H, (C₁₋₆)-Alkyl, Ar(R')_{q} (mit Ar = aromatischer (C₆₋₁₄)-Kohlenwasserstoff, R = (C₁₋₄)-Alkyl, Halogen, Alkoxy oder Vinyl, q = 0-5) . Als Katalysatoren werden unterschiedliche quartäre Phosphoniumhalogenide eingesetzt. Als Reaktionsmechanismus wird eine Dehydrochlorierung angenommen, bei allen Reaktionen wird Chlorwasserstoff abgespalten.

DE10018101 A1 offenbart ein Verfahren zur Herstellung von Organochlorsilanen ausgehend von Trichlorsilan, Dichlorsilan oder Dichlormethylsilan. Als weiterer Ausgangsstoff wird eine Verbindung der Formel R²CH₂X eingesetzt, mit X = Cl oder Br und R² ist ausgewählt aus (C₁₋₁₇)-Alkyl, (C₁₋₁₀)-fluoriertes Alkyl mit teilweiser oder vollständiger Fluorierung, (C₁₋₅)-Alkenyl, (CH₂)ₙSiMe₃₋ₘClₘ (mit n = 0-2 und m = 0-3), Ar(R')_{q} (mit Ar = aromatischer (C₆₋₁₄)-Kohlenwasserstoff, R = (C₁₋₄)-Alkyl, Halogen, Alkoxy oder Vinyl, q = 0-5), (CH₂)ₚX (mit p = 1-9 und X = Cl oder Br, oder ArCH₂X (mit Ar = aromatischer (C₆₋₁₄)-Kohlenwasserstoff und X = Cl oder Br). Als Katalysatoren werden tertiäre Amine oder Phosphine eingesetzt. Als Reaktionsmechanismus wird eine Dehydrochlorierung angenommen, bei allen Reaktionen wird Chlorwasserstoff abgespalten.

US2012/0114544 A1 offenbart ein Verfahren zur Herstellung von Organochlorsilanen ausgehend von einem Silan der Formel HCl₂Si-R¹ (mit R¹ = Cl, Methyl, Trichlorsilylmethyl, Dichlorosilylmethyl oder Methyldichlorosilylmethyl). Als weiterer Ausgangsstoff wird eine Verbindung der Formel R²-SiCl₃ eingesetzt (mit R² = Cl, lineare (C₂₋₁₈)-Alkylgruppe, Isopropyl, Isobutyl, tert-Butyl, Neopentyl, Isooctyl, Cyclopentyl, Cyclohexyl, Cycloheptyl, Cyclooctyl, Cyclohexenylmethyl, 2-(2-Pyridyl)ethyl, 2-(4-Pyridyl)ethyl, 2-(bicycloheptyl), 5-[(bicycloheptenyl)ethyl], 11-Acetoxyundecyl, 11-Chlorundecyl, Phenyl, Benzyl, 2-Phenylethyl, 1-Naphthyl, Diphenylmethyl, CH₃(C=O)O(CH₂)ₖ (mit k = 2, 3, 10), CF₃(CF₂)_{I}CH₂CH₂ (mit I = 0-12), R⁴-Ph-(CH₂)ₘ (mit m = 0, 1, 2, 3 und R⁴ = (C₁₋₄)-Alkylgruppe oder Halogen), Cl―(CH₂)ₙ― (mit n = 1-12), NC―(CH₂)ₒ― (mit o = 2-11), CH₂=CH―(CH₂)ₚ― (mit p = 0-20), Ar¹-CH(Me)― CH₂― (mit Ar¹ = (C₁₋₄)-Alkylgruppe, Phenyl substituiert mit einem Halogenatom, Biphenyl, Biphenylether, oder Naphthyl), Ar²O―(CH₂)_{q}― (mit q = 3-18 und Ar² = Phenyl, Biphenyl, Biphenylether, Naphthyl, oder Phenanthryl), Cl₃Si―(CH₂)ᵣ (mit r = 0-12), Cl₃Si―(CH₂)ₛ―Ar³― (CH₂)ₛ (mit s = 0 oder 1, und Ar³ = Phenyl, Biphenyl, Naphthyl, Anthracenyl, oder 2,2,5,5-Tetrachlor-4-trichlorsilyl-2,5-disilylcyclohexyl), oder Ar⁴―(CH₂)ₜ― (mit t = 0 oder 1, und Ar⁴ = Phenyl, Biphenyl, Naphthyl, oder Anthracenyl), Trichlorsilyl (Cl₃Si―) oder Trichlorsilyloxy (Cl₃SiO). Als Katalysator werden quartäre Phosphoniumhalogenide eingesetzt. US2002082438 A1 offenbart ein Verfahren zur Herstellung von Allyltrichlorsilan durch Reaktion von Dichlorsilan mit Allylchlorid.

Jung et al. (J. Org. Chem. 692 (2007) 3901-3906) offenbart die Umsetzung von Trichlorsilan mit Polychlormethanen wie Chloroform und Tetrachlormethan. Als Katalysator wird das quartäre Phosphoniumhalogenid Bu₄PCl eingesetzt. Als Reaktionsmechanismus wird eine Dehydrohalogenierung angenommen, bei allen Reaktionen wird Chlorwasserstoff abgespalten.

EP 1705180 A1 offenbart ein Verfahren zur Synthese von Organothiomethylsilanen ausgehend von einem Silan der Formel HCl₂Si-R¹ (mit R¹ = H, Halogen oder (C₁₋₆)-Alkyl). Als weiterer Ausgangsstoff wird eine Verbindung der Formel R²-S-CH₂-X (mit X = Halogen und R² = (C₁₋₆)-Alkyl oder Aryl) eingesetzt. Als Katalysator werden quartäre Ammonium- oder Phosphoniumhalogenide eingesetzt. Als Reaktionsmechanismus wird eine Dehydrohalogenierung angenommen, bei allen Reaktionen wird Chlorwasserstoff abgespalten.

DE102014118658 A1 beschreibt ein Verfahren zur Herstellung von perhalogeniertem Cyclohexasilan-Anion ausgehend von Trichlorsilan und Dichlorsilan. Als Katalysator werden quartäre Ammonium- oder Phosphoniumhalogenide eingesetzt. Es wird beschrieben, dass bei der Synthese als Nebenprodukt Wasserstoff entsteht.

DE102015105501 A1 beschreibt die Synthese der folgenden perchlorierten, anionischen, silylierten Kohlenstoffverbindungen [C(SiCl₃)₃]⁻, [(Cl₃Si)₂C-C(SiCl₃)₂]⁻, [(Cl₃C)₂SiCl₃]⁻ und [Cl₄CSiCl₃]⁻. Es wird eine Chlorkohlenstoffverbindung der Formel CₘH₄₋ₙClₙ (mit m = 1 oder 2, und n = 2-4) eingesetzt. Die andere Ausgangsverbindung, das Silan, ist auf Trichlorsilan, Hexachlordisilan und perchlorierte Cyclohexasilananionen beschränkt. Als Katalysator werden quartäre Ammonium- oder Phosphoniumhalogenide in stöchiometrischer Menge eingesetzt.

Es ist daher die Aufgabe der vorliegenden Erfindung, ein Verfahren bereitzustellen mit dem wirtschaftlich (Organo)trihalogensilane oder Trichlorsilan hergestellt werden können. Zudem sollte das Verfahren auch einen Zugang zu Stoffen ermöglichen, die über die beiden bisher bekannten Methoden nicht herstellbar sind.

Gelöst wird diese Aufgabe durch ein Verfahren zur Dehydrierung von Dichlorsilan, wobei Dichlorsilan in Gegenwart eines Ammonium- und/oder Phosphoniumsalzes bei einer Temperatur im Bereich von 70 - 300 °C entweder mit
(A) mindestens einem halogenierten Kohlenwasserstoff der Formel (I)

   R¹-X (I),

   wobei gilt
   X = F, Cl, Br oder I; und
   R¹ = verzweigter oder unverzweigter (C₂-C₂₀)-Alkylrest,
      verzweigter oder unverzweigter (C₂-C₁₃)-Heteroalkylrest, wobei das Kohlenstoffgerüst ein oder mehrere Heteroatome enthält, die unabhängig voneinander ausgewählt sind aus N, P, S oder O,
      verzweigter oder unverzweigter (C₁-C₁₀)-Fluoralkylrest mit teilweiser oder vollständiger Fluorierung,
      verzweigter oder unverzweigter (C₂-C₂₀)-Alkenylrest, wobei C₂H₄₋ₙClₙ mit n = 2-4 ausgeschlossen ist,
      verzweigter oder unverzweigter (C₂-C₂₀)-Alkinylrest,
      (C₃-C₁₄)-Cycloalkylrest,
      (C₂-C₁₃)-Heterocycloalkylrest, wobei das Ringgerüst ein oder mehrere Heteroatome enthält, die unabhängig voneinander ausgewählt sind aus N, P, S oder O, (C₆-C₁₄)-Arylrest,
      (C₅-C₁₃)-Heteroarylrest, wobei das Ringgerüst ein oder mehrere Heteroatome enthält, die unabhängig voneinander ausgewählt sind aus N, P, S oder O,
      (CH₂)ₙ-Ar, mit Ar = (C₆-C₁₄)-Arylrest und n = 1-5,
      wobei alle zuvor genannten Reste sowohl unsubstituiert als auch einfach oder mehrfach mit Halogen, (C₁-C₄)-Alkoxy, Vinyl, Phenyl oder (C₁-C₄)-Alkyl substituiert sein können,
      Methylrest,
      (CH₂)ₙX, mit n = 1-10 und X = F, Cl, Br oder I,
      R²⁻S-CH₂-Rest, mit R² = (C₁-C₆)-Alkyl oder (C₆-C₁₄)-Aryl,
      (CH₂)ₙSiMe₃₋ₘ-Clₘ, mit n = 0-5 und m = 0, 1, 2, 3,
      (CH₂)ₙNH(C=O)OCH₃, mit n = 1-5,
      (CH₂)ₙOCH₂(Oxiran), mit n = 1-5,
      (CH₂)ₙO(C=O)(C(CH₃)=CH₂), mit n = 1-5,
      (CH₂)ₙNH₂, mit n = 1-5,
      (CH₂)ₙNH(C=O)NH₂, mit n = 1-5,
      (CH₂)ₙNHR, mit n = 1-5, und R = Cyclohexyl oder C₂H₄NH₂;
      oder
(B) einem Halogenwasserstoff umgesetzt wird.

### Beschreibung

Bei dem erfindungsgemäßen Verfahren wird Dichlorsilan in Gegenwart eines Ammonium- und/oder Phosphoniumsalzes als Katalysator mit einem halogenierten Kohlenwasserstoff der Formel (I) oder einem Halogenwasserstoff umgesetzt. Für das erfindungsgemäße Verfahren können sowohl Dichlorsilan als auch Trichlorsilan als Edukte eingesetzt werden. Dichlorsilan wird dabei direkt dehydriert. Trichlorsilan dagegen disproportioniert zunächst zu Tetrachlorsilan und Dichlorsilan (Reaktionsschema 1), welches dann dehydriert wird.

2 HSiCl₃ → SiCl₄ + H₂SiCl₂ (Reaktionsschema 1)

Die Dehydrierung von Dichlorsilan läuft nach folgendem Reaktionsschema 2 ab:

H₂SiCl₂ + Cl⁻ → [SiCl₃]⁻ + H₂ (Reaktionsschema 2)

In einem ersten Reaktionsschritt wird zunächst unter Wasserstoffabspaltung aus Dichlorsilan das nicht isolierbare Intermediat [SiCl₃]⁻ gebildet (Reaktionsschema 2). Dieses Anion kann entweder unter formaler nucleophiler Substitution weiterreagieren oder es kann als Dichlorsilylen insertieren. Im Fall der Reaktion mit einer R―Cl Bindung ist das Produkt in beiden Fällen eine Verbindung R―SiCl₃ und in beiden Fällen wird wieder ein Chloridion frei, das dann wiederum als Katalysator zur Verfügung steht (Reaktionsschema 3):

[SiCl₃]^{―} + R―Cl → R―SiCl₃ + Cl^{―} (Reaktionsschema 3)

Reagiert das Intermediat mit einer Verbindung R-X (X = F, Br oder I) entsteht neben einem Chloridion eine Verbindung R―SiCl₃₋ₙXₙ (n = 0, 1, 2 oder 3), da es zu einem Halogenaustausch am Silicium kommt und damit insgesamt 4 Produkte erhalten werden (Reaktionsschema 4):

[SiCl₃]^{―} + R-X → R―SiCl₃₋ₙXₙ + Cl^{―} (X = F, Br, oder I;n = 0 bis 3) (Reaktionsschema 4)

Reagiert das Intermediat beispielsweise mit HCl, so wird Trichlorsilan gebildet und ein Chloridion wird frei (Reaktionsschema 5):

[SiCl₃]^{―} + H―Cl → HSiCl₃ + Cl^{―} (Reaktionsschema 5)

Im erfindungsgemäßen Verfahren wird als Katalysator ein Ammonium- und/oder Phosphoniumsalz eingesetzt. Das Ammonium- und/oder Phosphoniumsalz kann dabei auch in immobilisierter Form, z.B. auf einem Silikonharz, auf Silica, auf einem anorganischen Träger oder auf einem organischen Polymer, eingesetzt werden. Das Ammonium- und/oder Phosphoniumsalz kann auch in situ aus einem Amin oder Phosphin und HCl gebildet werden. Insbesondere eignen sich quartäre Ammoniumhalogenide [R₄N]X und Phosphoniumhalogenide [R₄P]X oder tertiäre Ammoniumhalogenide [R₃NH]X, wobei jeweils gilt
X = Cl, Br oder I, wobei Cl oder Br bevorzugt ist, und
R = unabhängig voneinander ausgewählt aus der Gruppe bestehend aus C₁-C₁₂-Alkylgruppe, C₁-C₆-Alkyl substituierte C₆-C₁₄-Arylgruppe, und Phenylgruppe, wobei Ethyl, n-Butyl, und Phenyl bevorzugt sind.

Besonders bevorzugte Beispiele solcher Verbindungen sind [*n*-Bu₄N]Cl, [Et₄N]Cl, [Ph₄P]Cl und [*n*-Bu₄P]Cl.

Als Reaktant wird entweder ein Halogenwasserstoff oder ein halogenierter Kohlenwasserstoff der Formel (I) eingesetzt.

Unter Halogenwasserstoff wird Fluorwasserstoff, Chlorwasserstoff, Bromwasserstoff oder lodwasserstoff verstanden, wobei Chlorwasserstoff bevorzugt ist.

R¹-X (I)

wobei gilt
X = F, Cl, Br oder I, und
R¹ = verzweigter oder unverzweigter (C₂-C₂₀)-Alkylrest,
   verzweigter oder unverzweigter (C₂-C₁₃)-Heteroalkylrest, wobei das Kohlenstoffgerüst ein oder mehrere Heteroatome enthält, die unabhängig voneinander ausgewählt sind aus N, P, S oder O,
   verzweigter oder unverzweigter (C₁-C₁₀)-Fluoralkylrest mit teilweiser oder vollständiger Fluorierung,
   verzweigter oder unverzweigter (C₂-C₂₀)-Alkenylrest, wobei C₂H₄₋ₙClₙ mit n = 2-4 ausgeschlossen ist,
   verzweigter oder unverzweigter (C₂-C₂₀)-Alkinylrest,
   (C₃-C₁₄)-Cycloalkylrest,
   (C₂-C₁₃)-Heterocycloalkylrest, wobei das Ringgerüst ein oder mehrere Heteroatome enthält, die unabhängig voneinander ausgewählt sind aus N, P, S oder O, (C₆-C₁₄)-Arylrest,
   (C₅-C₁₃)-Heteroarylrest, wobei das Ringgerüst ein oder mehrere Heteroatome enthält, die unabhängig voneinander ausgewählt sind aus N, P, S oder O,
   (CH₂)ₙ-Ar, mit Ar = (C₆-C₁₄)-Arylrest und n = 1-5,
   wobei alle zuvor genannten Reste sowohl unsubstituiert als auch einfach oder mehrfach mit Halogen, (C₁-C₄)-Alkoxy, Vinyl, Phenyl oder (C₁-C₄)-Alkyl substituiert sein können,
   Methylrest,
   (CH₂)ₙX, mit n = 1-10 und X = F, Cl, Br oder I,
   R²-S-CH₂-Rest, mit R² = (C₁-C₆)-Alkyl oder (C₆-C₁₄)-Aryl,
   (CH₂)ₙSiMe₃₋ₘ-Clₘ, mit n = 0-5 und m = 0, 1, 2, 3,
   (CH₂)ₙNH(C=O)OCH₃, mit n = 1-5,
   (CH₂)ₙOCH₂(Oxiran), mit n = 1-5,
   (CH₂)ₙO(C=O)(C(CH₃)=CH₂), mit n = 1-5,
   (CH₂)ₙNH₂, mit n = 1-5,
   (CH₂)ₙNH(C=O)NH₂, mit n = 1-5,
   (CH₂)ₙNHR, mit n = 1-5, und R = Cyclohexyl oder C₂H₄NH₂.
R¹ in Formel (I) ist bevorzugt ausgewählt aus der Gruppe bestehend aus
   verzweigter oder unverzweigter (C₂-C₂₀)-Alkylrest,
   verzweigter oder unverzweigter (C₂-C₁₃)-Heteroalkylrest, wobei das Kohlenstoffgerüst ein oder mehrere Heteroatome enthält, die unabhängig voneinander ausgewählt sind aus N, P, S oder O;
   verzweigter oder unverzweigter (C₂-C₂₀)-Alkenylrest, wobei C₂H₄₋ₙClₙ mit n = 2-4 ausgeschlossen ist,
   (C₃-C₁₄)-Cycloalkylrest,
   (C₂-C₁₃)-Heterocycloalkylrest, wobei das Ringgerüst ein oder mehrere Heteroatome enthält, die unabhängig voneinander ausgewählt sind aus N, P, S oder O,
   (CH₂)ₙ-Ar, mit Ar = (C₆-C₁₄)-Arylrest und n = 1-3,
   wobei alle zuvor genannten Reste sowohl unsubstituiert als auch einfach oder mehrfach mit Halogen, (C₁-C₄)-Alkoxy, Vinyl, Phenyl oder (C₁-C₄)-Alkyl substituiert sein können, Methylrest,
   (CH₂)ₙX, mit n = 1-10 und X = F, Cl, Br oder I,
   (CH₂)ₙSiMe₃₋ₘ-Clₘ, mit n = 0-5 und m = 0, 1, 2, 3.

### Beispiele für derartige Verbindungen sind:

Methylchlorid, Ethylchlorid, n-Propylchlorid, iso-Propylchlorid, n-Butylchlorid, tert-Butylchlorid, iso-Butylchlorid, sec-Butylchlorid, n-Pentylchlorid, n-Pentyliodid, n-Pentylbromid, n-Pentylfluorid, n-Octylchlorid, 1-Chlorhexadecan, 1,2-Dichlorethan, 1,1-Dichlorpropan, 1,2-Dichlorpropan, 1,3-Dichlorpropan, Monochlorbenzol, Benzylchlorid, Vinylchlorid, Allylchlorid, Allylbromid, 1-Chlor-2,4,4-trimethyl-Pentan, Hexadecylchlorid, 1-Chlor-3,3,3-trifluoropropan, Trichlor-(chlormethyl)-silan, Dichlor-(chlormethyl)-silan, Trimethyl-(chlormethyl)-silan, Trimethyl-(3-chlorpropyl)-silan, Crotylchlorid, 4-Fluorbenzylchlorid, 4-Chlorbenzylchlorid, 4-Methoxybenzylchlorid, 4-Phenylbenzylchlorid, Diphenyl-1-dichlormethan, (1-Chlorethyl)benzol, Cyclopentylchlorid, 1-Brom-3-chlorpropan, 1,4-Dichlorbutan, 1,4-bis(chlormethyl)benzol.

Das erfindungsgemäße Verfahren wird bei einer Temperatur im Bereich von 70 - 300 °C durchgeführt. Die Temperatur liegt bevorzugt in einem Bereich von 100 - 300 °C, besonders bevorzugt in einem Bereich von 100 - 180 °C, ganz besonders bevorzugt liegt die Temperatur in einem Bereich von 150 - 180 °C. Am meisten bevorzugt ist eine Temperatur in einem Bereich von 170 - 180 °C.

Das molare Verhältnis von Halogenwasserstoff bzw. halogeniertem Kohlenwasserstoff zu Dichlorsilan kann vom Fachmann frei gewählt werden.

Im Fall von Halogenwasserstoff als Reaktionspartner entspricht die Menge an zugesetztem Halogenwasserstoff vorzugsweise der stöchiometrischen Menge an umzuwandelndem Dichlorsilan. Im Fall aller anderen Reaktionspartner entspricht die stöchiometrische Menge an formal eingesetztem Dichlorsilan vorzugsweise mindestens der Menge an zu silylierenden R¹-X Bindungen. Wenn es nicht zu einer Silylierung aller R¹-X Bindungen kommen soll, wird die Verbindung R¹-X vorzugsweise überstöchiometrisch eingesetzt. Besonders bevorzugt liegt das molare Verhältnis von Dichlorsilan zu Halogenwasserstoff bzw. halogeniertem Kohlenwasserstoff in einem Bereich von 1 : 1 - 1 : 10 bezogen auf die Menge an R¹-X Bindungen.

Das molare Verhältnis von Katalysator zu Dichlorsilan kann vom Fachmann frei gewählt werden. Bevorzugt liegt das molare Verhältnis in einem Bereich von 0,01 : 1 - 0,2 : 1.

Mit dem erfindungsgemäßen Verfahren zur Dehydrierung von Dichlorsilan können auf wirtschaftliche Weise Organosilane hergestellt werden. Zudem ermöglicht das Verfahren die Umwandlung von Dichlorsilan in Trichlorsilan. Zum einen kann auf diese Weise grundsätzlich das im Chlorsilanprozess anfallende Nebenprodukt Dichlorsilan in das Hauptprodukt Trichlorsilan umgewandelt werden. Zum anderen können Mischungen der beiden Stoffe aufgearbeitet werden, so dass der Anteil an Dichlorsilan in der Mischung gesenkt wird oder die Mischung komplett in Trichlorsilan umgewandelt wird.

### Beispiele

GC-Messungen wurden mit einem Agilent 6890N durchgeführt (WLD-Detektor; Säulen: HP5 von Agilent: Länge: 30 m/ Durchmesser: 0,32 mm/ Filmdicke: 0,25 µm; RTX-200 von Restek: Länge: 60 m/ Durchmesser: 0,32 mm/ Filmdicke: 1 µm). Retentionszeiten wurden mit den kommerziell erhältlichen Substanzen abgeglichen, alle Chemikalien wurden verwendet wie gekauft. MS-Messungen wurden mit einem ThermoStar™ GSD 320 T2 mit Iridiumkathode durchgeführt.

### Reaktionen ausgehend von Trichlorsilan

### Beispiel 1: Synthese von Trichlormethylsilan

Ein Autoklav wurde mit HSiCl₃ (50 g; 0,37 mol), [*n*-Bu₄N]Cl (0,2 g; 0,7 mmol) und MeCl (9,4 g; 0,19 mol) befüllt. Der Autoklav wurde für 13 h auf 140 °C erhitzt. Nach dem Abkühlen verblieben ca. 10 bar Druck auf dem Autoklav. Die Produktmischung bestand zu 30 Gew.-% aus Cl₃SiMe, 50 Gew.-% SiCl₄ und 20 Gew.-% HSiCl₃, außerdem waren Spuren MeCl sowie H₂SiCl₂ nachweisbar. Das bei der Reaktion entstandene Gas konnte eindeutig mittels Massenspektrometrie als Wasserstoff identifiziert werden.

### Beispiel 2: Synthese von n-Propyltrichlorsilan

Ein Autoklav wurde mit HSiCl₃ (40 g; 0,30 mol), [*n*-Bu₄P]Cl (2 g; 6,8 mmol) und MeCH₂CH₂Cl (10 g; 0,13 mol) befüllt. Der Autoklav wurde für 13 h auf 175 °C erhitzt. Nach dem Abkühlen verblieben ca. 20 bar Druck auf dem Autoklav. Die Produktmischung bestand zu 48 Gew.-% aus Cl₃SiCH₂CH₂Me, 42 Gew.-% SiCl₄, 8 Gew.-% HSiCl₃ und 2 Gew.-% MeCH₂CH₂Cl, außerdem waren Spuren H₂SiCl₂ nachweisbar. Das bei der Reaktion entstandene Gas konnte eindeutig mittels Massenspektrometrie als Wasserstoff identifiziert werden.

### Beispiel 3: Synthese von 1-Chlor-3-trichlorsilylpropan und 1,3-Bis(trichlorosilyl)propan

Ein Autoklav wurde mit HSiCl₃ (36,6 g; 0,27 mol), [*n*-Bu₄P]Cl (2 g; 6,8 mmol) und Cl-CH₂CH₂CH₂-Cl (15,4 g; 0,13 mol) befüllt. Der Autoklav wurde für 13 h auf 170 °C erhitzt. Nach dem Abkühlen verblieben ca. 10 bar Druck auf dem Autoklav. Die Produktmischung bestand zu 25 Gew.-% aus Cl₃SiCH₂CH₂CH₂Cl, 14 Gew.-% Cl₃SiCH₂CH₂CH₂SiCl₃, 14 Gew.-% ClCH₂CH₂CH₂Cl, 45 Gew.-% SiCl₄, 2 Gew.-% HSiCl₃ und Spuren von H₂SiCl₂. Das bei der Reaktion entstandene Gas konnte eindeutig mittels Massenspektrometrie als Wasserstoff identifiziert werden.

### Beispiel 4: Synthese von 1-Chlor-3-trichlorsilylpropan

Ein Autoklav wurde mit HSiCl₃ (18 g; 0,13 mol), [*n*-Bu₄P]Cl (2 g; 6,8 mmol) und Cl-CH₂CH₂CH₂-Cl (30,2 g; 0,27 mol) befüllt. Der Autoklav wurde für 13 h auf 170 °C erhitzt. Nach dem Abkühlen verblieben ca. 5 bar Druck auf dem Autoklav. Die Produktmischung bestand zu 21 Gew.-% aus Cl₃SiCH₂CH₂CH₂Cl, 1 Gew.-% Cl₃SiCH₂CH₂CH₂SiCl₃, 59 Gew.-% ClCH₂CH₂CH₂Cl, 19 Gew.-% SiCl₄ und Spuren von H₂SiCl₂. Das bei der Reaktion entstandene Gas konnte eindeutig mittels Massenspektrometrie als Wasserstoff identifiziert werden.

### Beispiel 5: Synthese von Allyltrichlorsilan

Ein Autoklav wurde mit HSiCl₃ (20 g; 0,15 mol), [*n*-Bu₄P]Cl (2 g; 6,8 mmol) und Allylchlorid (11,2 g; 0,15 mol) befüllt. Der Autoklav wurde für 13 h auf 150 °C erhitzt. Nach dem Abkühlen verblieben ca. 15 bar Druck auf dem Autoklav. Die Produktmischung bestand zu 42 Gew.-% aus Cl₃SiCH₂CHCH₂, 40 Gew.-% aus SiCl₄, 18 Gew.-% aus ClCH₂CHCH₂und Spuren von H₂SiCl₂. Das bei der Reaktion entstandene Gas konnte eindeutig mittels Massenspektrometrie als Wasserstoff identifiziert werden.

### Reaktionen ausgehend von Dichlorsilan

### Beispiel 6a) Synthese von n-Propyltrichlorsilan

Ein Autoklav wurde mit H₂SiCl₂ (27 g; 0,27 mol), [*n*-Bu₄P]Cl (2,5 g; 8 mmol) und MeCH₂CH₂Cl (49,5 g; 0,63 mol) befüllt. Der Autoklav wurde für 13 h auf 175 °C erhitzt. Nach dem Abkühlen verblieben ca. 45 bar Druck auf dem Autoklav. Die Produktmischung bestand zu 50 Gew.-% aus Cl₃SiCH₂CH₂Me, 2 Gew.-% SiCl₄, 2 Gew.-% HSiCl₃ und 46 Gew.-% MeCH₂CH₂Cl, außerdem waren Spuren H₂SiCl₂ nachweisbar. Das bei der Reaktion entstandene Gas konnte eindeutig mittels Massenspektrometrie als Wasserstoff identifiziert werden.

### Beispiel 6b) Synthese von n-Pentyltrichlorsilan

Ein Autoklav wurde mit H₂SiCl₂ (15 g; 0,15 mol), [*n*-Bu₄P]Cl (2,5 g; 8 mmol) und Me(CH₂)₄Cl (50,5 g; 0,48 mol) befüllt. Der Autoklav wurde für 13 h auf 177 °C erhitzt. Nach dem Abkühlen verblieben ca. 13 bar Druck auf dem Autoklav. Die Produktmischung bestand zu 45 Gew.-% aus Cl₃Si(CH₂)₄Me und 55 Gew.-% Me(CH₂)₄Cl, außerdem waren Spuren H₂SiCl₂ nachweisbar. Das bei der Reaktion entstandene Gas konnte eindeutig mittels Massenspektrometrie als Wasserstoff identifiziert werden.

### Beispiel 6c) Synthese von n-Pentyltrihalosilan ausgehend von 1-lodpentan

Ein Autoklav wurde mit H₂SiCl₂ (11 g; 0,11 mol), [*n*-Bu₄P]Cl (2,0 g; 7 mmol) und Me(CH₂)₄I (27,5 g; 0,14 mol) befüllt. Der Autoklav wurde für 13 h auf 175 °C erhitzt. Nach dem Abkühlen verblieben ca. 16 bar Druck auf dem Autoklav. Die Produktmischung bestand zu 80 Gew.-% aus einer Mischung von Cl₃₋ₙIₙSi(CH₂)₄Me (n = 0-3) und 20 Gew.-% Me(CH₂)₄I, außerdem waren Spuren H₂SiCl₂ nachweisbar. Das bei der Reaktion entstandene Gas konnte eindeutig mittels Massenspektrometrie als Wasserstoff identifiziert werden.

### Beispiel 6d) Synthese von n-Pentyltrihalosilan ausgehend von 1-Brompentan

Ein Autoklav wurde mit H₂SiCl₂ (26 g; 0,26 mol), [*n*-Bu₄P]Cl (2,0 g; 7 mmol) und Me(CH₂)₄Br (40,0 g; 0,27 mol) befüllt. Der Autoklav wurde für 13 h auf 170 °C erhitzt. Nach dem Abkühlen verblieben ca. 33 bar Druck auf dem Autoklav. Die Produktmischung bestand zu 100 Gew.-% aus einer Mischung von Cl₃₋ₙBrₙSi(CH₂)₄Me (n= 0-3), außerdem waren Spuren H₂SiCl₂ nachweisbar. Das bei der Reaktion entstandene Gas konnte eindeutig mittels Massenspektrometrie als Wasserstoff identifiziert werden.

### Beispiel 6e) Synthese von n-Pentyltrihalosilan ausgehend von 1-Fluorpentan

Ein Autoklav wurde mit H₂SiCl₂ (26 g; 0,26 mol), [*n*-Bu₄P]Cl (2,0 g; 7 mmol) und Me(CH₂)₄F (23,5 g; 0,26 mol) befüllt. Der Autoklav wurde für 13 h auf 170 °C erhitzt. Nach dem Abkühlen verblieben ca. 10 bar Druck auf dem Autoklav. Die Produktmischung bestand zu 100 Gew.-% aus einer Mischung von Cl₃₋ᵣFₙSi(CH₂)₄Me (n= 0-3), außerdem waren Spuren H₂SiCl₂ nachweisbar. Das bei der Reaktion entstandene Gas konnte eindeutig mittels Massenspektrometrie als Wasserstoff identifiziert werden.

### Beispiel 7a) Umsetzung von Dichlorsilan mit HCl

Ein Autoklav wurde mit H₂SiCl₂ (17 g; 0,17 mol), HCl (6,2 g; 0,17 mol), [*n*-Bu₄P]Cl (2,0 g; 7 mmol) und HSiCl₃ (20 g; 0,25 mol) befüllt. Der Autoklav wurde für 13 h auf 180 °C erhitzt. Nach dem Abkühlen verblieben ca. 19 bar Druck auf dem Autoklav. Das Produkt bestand zu 100 Gew.-% aus HSiCl₃, außerdem waren Spuren H₂SiCl₂ nachweisbar. Das bei der Reaktion entstandene Gas konnte eindeutig mittels Massenspektrometrie als Wasserstoff identifiziert werden, auch Reste von HCl waren nachweisbar.

### Beispiel 7b) Umsetzung von Dichlorsilan mit HCl

Ein Autoklav wurde mit H₂SiCl₂ (17 g; 0,17 mol), HCl (6,2 g; 0,17 mol), BU₃N (1,0 g; 5 mmol) und HSiCl₃ (20 g; 0,15 mol) befüllt. Der Autoklav wurde für 13 h auf 180 °C erhitzt. Nach dem Abkühlen verblieben ca. 19 bar Druck auf dem Autoklav. Das Produkt bestand zu 100 Gew.-% aus HSiCl₃, außerdem waren Spuren H₂SiCl₂ nachweisbar. Das bei der Reaktion entstandene Gas konnte eindeutig mittels Massenspektrometrie als Wasserstoff identifiziert werden, auch Reste von HCl waren nachweisbar.

## Patentansprüche

1. Verfahren zur Dehydrierung von Dichlorsilan unter Entstehung von Wasserstoff, wobei Dichlorsilan in Gegenwart eines Ammonium- und/oder Phosphoniumsalzes bei einer Temperatur im Bereich von 70 - 300 °C entweder mit
(A) mindestens einem halogenierten Kohlenwasserstoff der Formel (I)
R¹-X (I),
wobei gilt
X = F, Cl, Br oder I; und
R¹ = verzweigter oder unverzweigter (C₂-C₂₀)-Alkylrest,
verzweigter oder unverzweigter (C₂-C₁₃)-Heteroalkylrest, wobei das Kohlenstoffgerüst ein oder mehrere Heteroatome enthält, die unabhängig voneinander ausgewählt sind aus N, P, S oder O,
verzweigter oder unverzweigter (C₁-C₁₀)-Fluoralkylrest mit teilweiser oder vollständiger Fluorierung,
verzweigter oder unverzweigter (C₂-C₂₀)-Alkenylrest, wobei C₂H₄₋ₙClₙ mit n = 2-4 ausgeschlossen ist,
verzweigter oder unverzweigter (C₂-C₂₀)-Alkinylrest,
(C₃-C₁₄)-Cycloalkylrest,
(C₂-C₁₃)-Heterocycloalkylrest, wobei das Ringgerüst ein oder mehrere Heteroatome enthält, die unabhängig voneinander ausgewählt sind aus N, P, S oder O,
(C₆-C₁₄)-Arylrest,
(C₅-C₁₃)-Heteroarylrest, wobei das Ringgerüst ein oder mehrere Heteroatome enthält, die unabhängig voneinander ausgewählt sind aus N, P, S oder O, (CH₂)ₙ-Ar, mit Ar = (C₆-C₁₄)-Arylrest und n = 1-5,
wobei alle zuvor genannten Reste sowohl unsubstituiert als auch einfach oder mehrfach mit Halogen, (C₁-C₄)-Alkoxy, Vinyl, Phenyl oder (C₁-C₄)-Alkyl substituiert sein können,
Methylrest,
(CH₂)ₙX, mit n = 1-10 und X = F, Cl, Br oder I,
R²-S-CH₂-Rest, mit R² = (C₁-C₆)-Alkyl oder (C₆-C₁₄)-Aryl,
(CH₂)ₙSiMe₃₋ₘ-Clₘ, mit n = 0-5 und m = 0, 1, 2, 3,
(CH₂)ₙNH(C=O)OCH₃, mit n = 1-5,
(CH₂)ₙOCH₂(Oxiran), mit n = 1-5,
(CH₂)ₙO(C=O)(C(CH₃)=CH₂), mit n = 1-5,
(CH₂)ₙNH₂, mit n = 1-5,
(CH₂)ₙNH(C=O)NH₂, mit n = 1-5,
(CH₂)ₙNHR, mit n = 1-5, und R = Cyclohexyl oder C₂H₄NH₂;
oder
(B) einem Halogenwasserstoff umgesetzt wird,
wobei das molare Verhältnis von Dichlorsilan zu Halogenwasserstoff bzw. halogeniertem Kohlenwasserstoff in einem Bereich von 1 : 1 - 1 : 10 liegt.

2. Verfahren nach Anspruch 1, wobei die Temperatur in einem Bereich von 100 - 300 °C liegt.

3. Verfahren nach Anspruch 1 oder 2, wobei das molare Verhältnis von Katalysator zu Dichlorsilan in einem Bereich von 0,01 : 1 - 0,2 : 1 liegt.

4. Verfahren nach einem der Ansprüche 1-3, wobei der Halogenwasserstoff Chlorwasserstoff ist.

5. Verfahren nach einem der Ansprüche 1-4, wobei das Ammonium- und/oder Phosphoniumsalz ein quartäres Ammoniumhalogenid [R₄N]X und Phosphoniumhalogenid [R₄P]X oder tertiäres Ammoniumhalogenid [R₃NH]X ist, wobei jeweils X = Cl, Br oder I bedeutet.

6. Verfahren nach Anspruch 5, wobei das Ammonium- und/oder Phosphoniumsalz ausgewählt ist aus der Gruppe bestehend aus [*n*-Bu₄N]Cl, [Et₄N]Cl, [Ph₄P]Cl und *[n-*Bu₄P]Cl.

7. Verfahren nach einem der Ansprüche 1-6, wobei R¹ ausgewählt ist aus der Gruppe bestehend aus verzweigter oder unverzweigter (C₂-C₂₀)-Alkylrest,
verzweigter oder unverzweigter (C₂-C₁₃)-Heteroalkylrest, wobei das Kohlenstoffgerüst ein oder mehrere Heteroatome enthält, die unabhängig voneinander ausgewählt sind aus N, P, S oder O;
verzweigter oder unverzweigter (C₂-C₂₀)-Alkenylrest, wobei C₂H₄₋ₙClₙ mit n = 2-4 ausgeschlossen ist,
(C₃-C₁₄)-Cycloalkylrest,
(C₂-C₁₃)-Heterocycloalkylrest, wobei das Ringgerüst ein oder mehrere Heteroatome enthält, die unabhängig voneinander ausgewählt sind aus N, P, S oder O,
(CH₂)ₙ-Ar, mit Ar = (C₆-C₁₄)-Arylrest und n = 1-3,
wobei alle zuvor genannten Reste sowohl unsubstituiert als auch einfach oder mehrfach mit Halogen, (C₁-C₄)-Alkoxy, Vinyl, Phenyl oder (C₁-C₄)-Alkyl substituiert sein können,
Methylrest,
(CH₂)ₙX, mit n = 1-10 und X = F, Cl, Br oder I,
(CH₂)ₙSiMe₃₋ₘ-Clₘ, mit n = 0-5 und m = 0, 1, 2, 3.

8. Verfahren nach einem der Ansprüche 1-7, wobei der halogenierte Kohlenwasserstoff ausgewählt ist aus der Gruppe bestehend aus Methylchlorid, Ethylchlorid, n-Propylchlorid, iso-Propylchlorid, n-Butylchlorid, tert-Butylchlorid, iso-Butylchlorid, sec-Butylchlorid, n-Pentylchlorid, n-Pentyliodid, n-Pentylbromid, n-Pentylfluorid, n-Octylchlorid, 1-Chlorhexadecan, 1,2-Dichlorethan, 1,1-Dichlorpropan, 1,2-Dichlorpropan, 1,3-Dichlorpropan, Monochlorbenzol, Benzylchlorid, Vinylchlorid, Allylchlorid, Allylbromid, 1-Chlor-2,4,4-trimethyl-Pentan, Hexadecylchlorid, 1-Chlor-3,3,3-trifluoropropan, Trichlor-(chlormethyl)-silan, Dichlor-(chlormethyl)-silan, Trimethyl-(chlormethyl)-silan, Trimethyl-(3-chlorpropyl)-silan, Crotylchlorid, 4-Fluorbenzylchlorid, 4-Chlorbenzylchlorid, 4-Methoxybenzylchlorid, 4-Phenylbenzylchlorid, Diphenyl-1-dichlormethan, (1-Chlorethyl)benzol, Cyclopentylchlorid, 1-Brom-3-chlorpropan, 1,4-Dichlorbutan, 1,4-bis(chlormethyl)benzol.

9. Verfahren nach einem der Ansprüche 1-8, wobei Dichlorsilan in situ durch die Disproportionierung von Trichlorsilan gebildet wird.

10. Verfahren nach einem der Ansprüche 1-9, wobei das Verfahren kontinuierlich oder diskontinuierlich betrieben wird.

## Claims

1. Method for the dehydrogenation of dichlorosilane in which hydrogen is formed, wherein
dichlorosilane is reacted in the presence of an ammonium and/or phosphonium salt at a temperature within a range of 70-300°C either with
(A) at least one halogenated hydrocarbon of the formula (I)
R¹-X (I)
, where
X = F, Cl, Br or I; and
R¹ = branched or unbranched C₂-C₂₀ alkyl radical,
branched or unbranched C₂-C₁₃ heteroalkyl radical, the carbon skeleton containing one or more heteroatoms independently selected from N, P, S or O,
branched or unbranched C₁-C₁₀ fluoroalkyl radical with partial or complete fluorination, branched or unbranched C₂-C₂₀ alkenyl radical, excluding C₂H₄₋ₙClₙ when n = 2-4,
branched or unbranched C₂-C₂₀ alkynyl radical, C₃-C₁₄ cycloalkyl radical,
C₂-C₁₃ heterocycloalkyl radical, the ring skeleton containing one or more heteroatoms independently selected from N, P, S or O, C₆-C₁₄ aryl radical,
C₅-C₁₃ heteroaryl radical, the ring skeleton containing one or more heteroatoms independently selected from N, P, S or O,
(CH₂)ₙ-Ar, where Ar = C₆-C₁₄ aryl radical and n = 1-5,
where all of the above-mentioned radicals may be unsubstituted or else singly or multiply substituted by halogen, C₁-C₄ alkoxy, vinyl, phenyl or C₁-C₄ alkyl,
methyl radical,
(CH₂)ₙX, where n = 1-10 and X = F, Cl, Br or I,
R²-S-CH₂ radical, where R² = C₁-C₆ alkyl or C₆-C₁₄ aryl,
(CH₂)ₙSiMe₃₋ₘ-Clₘ, where n = 0-5 and m = 0, 1, 2, 3,
(CH₂)ₙNH(C=O)OCH₃, where n = 1-5,
(CH₂)ₙOCH₂ (oxirane), where n = 1-5,
(CH₂)ₙO(C=O)(C(CH₃)=CH₂), where n = 1-5,
(CH₂)ₙNH₂, where n = 1-5,
(CH₂)ₙNH(C=O) NH₂, where n = 1-5,
(CH₂)ₙNHR, where n = 1-5, and R = cyclohexyl or C₂H₄NH₂;
or
(B) a hydrogen halide,
wherein the molar ratio of dichlorosilane to hydrogen halide or halogenated hydrocarbon is within a range from 1:1 to 1:10.

2. Method according to Claim 1, wherein the temperature is within a range of 100-300°C.

3. Method according to Claim 1 or 2, wherein the molar ratio of catalyst to dichlorosilane is within a range from 0.01:1 to 0.2:1.

4. Method according to any of Claims 1-3, wherein the hydrogen halide is hydrogen chloride.

5. Method according to any of Claims 1-4, wherein the ammonium and/or phosphonium salt is a quaternary ammonium halide [R₄N]X and phosphonium halide [R₄P]X or tertiary ammonium halide [R₃NH]X, where X is in each case Cl , Br or I.

6. Method according to Claim 5, wherein the ammonium and/or phosphonium salt is selected from the group consisting of [*n*-Bu₄N]Cl, [Et₄N]Cl, [Ph₄P]Cl, and [n-BU₄P]Cl.

7. Method according to any of Claims 1-6, wherein R¹ is selected from the group consisting of branched or unbranched C₂-C₂₀ alkyl radical,
branched or unbranched C₂-C₁₃ heteroalkyl radical, the carbon skeleton containing one or more heteroatoms independently selected from N, P, S or O;
branched or unbranched C₂-C₂₀ alkenyl radical, excluding C₂H₄₋ₙClₙ when n = 2-4,
C₃-C₁₄ cycloalkyl radical,
C₂-C₁₃ heterocycloalkyl radical, the ring skeleton containing one or more heteroatoms independently selected from N, P, S or O,
(CH₂)ₙ-Ar, where Ar = C₆-C₁₄ aryl radical and n = 1-3,
where all of the above-mentioned radicals may be unsubstituted or else singly or multiply substituted by halogen, C₁-C₄ alkoxy, vinyl, phenyl or C₁-C₄ alkyl,
methyl radical,
(CH₂)ₙX, where n = 1-10 and X = F, Cl, Br or I, (CH₂)ₙSiMe₃₋ₘ-Clₘ, where n = 0-5 and m = 0, 1, 2, 3.

8. Method according to any of Claims 1-7, wherein the halogenated hydrocarbon is selected from the group consisting of methyl chloride, ethyl chloride, n-propyl chloride, isopropyl chloride, n-butyl chloride, tert-butyl chloride, isobutyl chloride, sec-butyl chloride, n-pentyl chloride, n-pentyl iodide, n-pentyl bromide, n-pentyl fluoride, n-octyl chloride, 1-chlorohexadecane, 1,2-dichloroethane, 1,1-dichloropropane, 1,2-dichloropropane, 1,3-dichloropropane, monochlorobenzene, benzyl chloride, vinyl chloride, allyl chloride, allyl bromide, 1-chloro-2,4,4-trimethylpentane, hexadecyl chloride, 1-chloro-3,3,3-trifluoropropane, trichloro(chloromethyl) silane, dichloro(chloromethyl) silane, trimethyl(chloromethyl)silane, trimethyl(3-chloropropyl)silane, crotyl chloride, 4-fluorobenzyl chloride, 4-chlorobenzyl chloride, 4-methoxybenzyl chloride, 4-phenylbenzyl chloride, diphenyl-1-dichloromethane, (1-chloroethyl)benzene, cyclopentyl chloride, 1-bromo-3-chloropropane, 1,4-dichlorobutane, 1,4-bis(chloromethyl)benzene.

9. Method according to any of Claims 1-8, wherein dichlorosilane is formed in situ by the disproportionation of trichlorosilane.

10. Method according to any of Claims 1-9, wherein the method is operated continuously or batchwise.

## Revendications

1. Procédé de déshydrogénation de dichlorosilane avec formation d'hydrogène, dans lequel du dichlorosilane est mis à réagir, en présence d'un sel d'ammonium et/ou de phosphonium à une température dans la plage de 70 à 300 °C, soit avec
(A) au moins un hydrocarbure halogéné de Formule (I)
R¹-X (I),
dans laquelle
X = F, Cl, Br ou I ; et
R¹ = un radical alkyle en C₂-C₂₀ ramifié ou non ramifié,
un radical hétéroalkyle en C₂-C₁₃ ramifié ou non ramifié, le squelette carboné contenant un ou plusieurs hétéroatomes qui sont indépendamment les uns des autres choisis parmi N, P, S ou O,
un radical fluoralkyle en C₁-C₁₀ ramifié ou non ramifié avec une fluoration partielle ou complète,
un radical alcényle en C₂-C₂₀ ramifié ou non ramifié, à l'exclusion de C₂H₄₋ₙClₙ avec n = 2 à 4,
un radical alcynyle en C₂-C₂₀ ramifié ou non ramifié,
un radical cycloalkyle en C₃-C₁₄,
un radical hétérocycloalkyle en C₂-C₁₃, le squelette cyclique contenant un ou plusieurs hétéroatomes qui sont indépendamment les uns des autres choisis parmi N, P, S ou O,
un radical aryle en C₆-C₁₄,
un radical hétéroaryle en C₅-C₁₃, le squelette cyclique contenant un ou plusieurs hétéroatomes qui sont indépendamment les uns des autres choisis parmi N, P, S ou O,
(CH₂)ₙ-Ar avec Ar = un radical aryle en C₆-C₁₄ et n = 1 à 5,
tous les radicaux mentionnés ci-dessus pouvant aussi bien être non substitués qu'une fois ou plusieurs fois substitués par un halogène, un alcoxy en C₁-C₄, un vinyle, un phényle ou un alkyle en C₁-C₄,
un radical méthyle,
(CH₂)ₙX avec n = 1 à 10 et X = F, Cl, Br ou I,
un radical R²-S-CH₂ avec R² = un alkyle en C₁-C₆ ou un aryle en C₆-C₁₄,
(CH₂)ₙSiMe₃₋ₘ-Clₘ avec n = 0 à 5 et m = 0, 1, 2, 3,
(CH₂)ₙNH(C=O) OCH₃ avec n = 1 à 5,
(CH₂)ₙOCH₂(Oxirane) avec n = 1 à 5,
(CH₂)ₙO(C=O)(C(CH₃)=CH₂), avec n = 1 à 5,
(CH₂)ₙNH₂, avec n = 1 à 5,
(CH₂)ₙNH(C=O) NH₂, avec n = 1 à 5,
(CH₂)ₙNHR, avec n = 1 à 5 et R = un cyclohexyle ou C₂H₄NH₂;
soit avec
(B) un acide halogénhydrique,
le rapport en moles du dichlorosilane à l'acide halogénhydrique ou à l'hydrocarbure halogéné étant compris dans la plage de 1:1 à 1:10.

2. Procédé selon la revendication 1, dans lequel la température est comprise dans la plage de 100 à 300 °C.

3. Procédé selon la revendication 1 ou 2, dans lequel le rapport en moles du catalyseur au dichlorosilane est compris dans la plage de 0,01 : 1 à 0,2 : 1.

4. Procédé selon l'une des revendications 1 à 3, dans lequel l'acide halogénhydrique est l'acide chlorhydrique.

5. Procédé selon l'une des revendications 1 à 4, dans lequel le sel d'ammonium et/ou de phosphonium est un halogénure d'ammonium [R₄N]X et un halogénure de phosphonium [R₄P]X quaternaires ou un halogénure d'ammonium tertiaire [R₃NH]X, X représentant dans chaque cas Cl, Br ou I.

6. Procédé selon la revendication 5, dans lequel le sel d'ammonium et/ou de phosphonium est choisi dans le groupe consistant en [*n*-Bu₄N]Cl, [Et₄N]Cl, [Ph₄P]Cl et [*n*-Bu₄P]Cl.

7. Procédé selon l'une des revendications 1 à 6, dans lequel R¹ est choisi dans le groupe consistant en un radical alkyle en C₂-C₂₀ ramifié ou non ramifié,
un radical hétéroalkyle en C₂-C₁₃ ramifié ou non ramifié, le squelette carboné contenant un ou plusieurs hétéroatomes qui sont choisis indépendamment les uns des autres parmi N, P, S ou O ;
un radical alcényle en C₂-C₂₀ ramifié ou non ramifié, à l'exclusion de C₂H₄₋ₙClₙ avec n = 2 à 4,
un radical cycloalkyle en C₃-C₁₄,
un radical hétérocycloalkyle en C₂-C₁₃, le squelette cyclique contenant un ou plusieurs hétéroatomes qui sont choisis indépendamment les uns des autres parmi N, P, S ou O,
(CH₂)ₙ-Ar, avec Ar = un radical aryle en C₆-C₁₄ et n = 1 à 3,
dans lequel tous les radicaux mentionnés ci-dessus peuvent être aussi bien non substitués qu'une ou plusieurs fois substitués par un halogène, un alcoxy en C₁-C₄, un vinyle, un phényle ou un alkyle en C₁-C₄,
un radical méthyle,
(CH₂)ₙX, avec n = 1 à 10 et X = F, Cl, Br ou I,
(CH₂)ₙSiMe₃₋ₘ-Clₘ, avec n = 0 à 5 et m = 0, 1, 2 ou 3.

8. Procédé selon l'une des revendications 1 à 7, dans lequel l'hydrocarbure halogéné est choisi dans le groupe consistant en le chlorure de méthyle, le chlorure d'éthyle, le chlorure de n-propyle, le chlorure d'isopropyle, le chlorure de n-butyle, le chlorure de tert-butyle, le chlorure d'isobutyle, le chlorure de sec-butyle, le chlorure de n-pentyle, l'iodure de n-pentyle, le bromure de n-pentyle, le fluorure de n-pentyle, le chlorure de n-octyle, le 1-chlorohexadécane, le 1,2-dichloroéthane, le 1,1-dichloropropane, le 1,2-dichloropropane, le 1,3-dichloropropane, le monochlorobenzène, le chlorure de benzyle, le chlorure de vinyle, le chlorure d'allyle, le bromure d'allyle, le 1-chloro-2,4,4-triméthyl-pentane, le chlorure d'hexadécyle, le 1-chloro-3,3,3-trifluoropropane, le trichloro-(chlorométhyl)-silane, le dichloro-(chlorométhyl)-silane, le triméthyl-(chlorométhyl)-silane, le triméthyl-(3-chloropropyl)-silane, le chlorure de crotyle, le chlorure de 4-fluorobenzyle, le chlorure de 4-chlorobenzyle, le chlorure de 4-méthoxybenzyle, le chlorure de 4-phénylbenzyle, le diphényl-1-dichlorométhane, le (1-chloroéthyl)benzène, le chlorure de cyclopentyle, le 1-bromo-3-chloropropane, le 1,4-dichlorobutane, le 1,4-bis(chlorométhyl)benzène.

9. Procédé selon l'une des revendications 1 à 8, dans lequel le dichlorosilane est formé in situ par la dismutation du trichlorosilane.

10. Procédé selon l'une des revendications 1 à 9, le procédé étant exploité d'une manière continue ou discontinue.
